# EUROPÄISCHE PATENTANMELDUNG

(11) **EP 4 764 625 A1**
(43) Veröffentlichungstag der Anmeldung: **24.06.2026**
(21) Anmeldenummer: 24222159.6
(22) Anmeldetag: 20.12.2024
(51) Int. Cl.: G02B 5/04, G02B 19/00, G02B 27/12, G02B 27/14, G01S 17/04, G01S 7/481

(54) **STRAHLTEILUNGSPRISMA UND LICHTTASTER**

(71) Anmelder: SICK AG, 79183 Waldkirch (DE)
(72) Erfinder: Albrecht, Roland, 79312 Emmendingen (DE)
(74) Vertreter: Manitz Finsterwald Patent- und Rechtsanwaltspartnerschaft mbB

(57) **Zusammenfassung**

Die vorliegende Erfindung betrifft ein Strahlteilungsprisma mit einem transparenten Körper, welcher einen Lichteintrittspfad, der zwischen einem Lichteintrittsbereich und einem Strahlteilungsbereich vorgesehen ist, und zumindest zwei, in unterschiedliche Raumrichtungen verlaufende Lichtaustrittspfade aufweist, wobei der Strahlteilungsbereich mehrere Auskoppelflächen aufweist, welche zumindest bezüglich ihrer geometrischen Eigenschaften teilweise unterschiedlich ausgestaltet und dazu eingerichtet sind, in Abhängigkeit von ihren geometrischen Eigenschaften unmittelbar über dem Lichteintrittspfad eintretendes Licht in einen der Lichtaustrittspfade zu leiten. Die Erfindung betrifft ferner einen Lichttaster mit einem derartigen Strahlteilungsprisma.

## Beschreibung

Die vorliegende Erfindung betrifft ein Strahlteilungsprisma mit einem Lichteintrittspfad und zumindest zwei, in unterschiedlichen Raumrichtungen verlaufenden Lichtaustrittspfaden.

Bei vielen optischen oder optoelektronischen Anwendungen werden optische Strahlteiler verwendet, welche einen einzelnen Lichtstrahl in zwei Teilstrahlen trennen. Zum Beispiel werden Strahlteiler in Lichttastern, Interferometern, Binokular-Aufsätzen von Mikroskopen, optischen Entfernungsmessern, Justierlasern oder Laserteleskopen eingesetzt.

In EP 3 130 941 B1 ist ein Lichttaster beschrieben, bei dem das Empfangslicht auf zwei Lichtempfänger aufgeteilt wird, wobei die Lichtempfänger unterschiedlich große wirksame Empfangsflächen aufweisen. Das Verhältnis der von den jeweiligen Lichtempfängern erzeugten Empfangssignale hängt von der Tastweite eines detektierten Objekts ab. Die Aufteilung des Empfangslichts auf die verschiedenen Lichtempfänger erfolgt mit Hilfe eines Strahlteilers.

In EP 3 130 941 B1 wird als Strahlteiler ein Teilerspiegel oder ein Teilerprisma eingesetzt. Ein Teilerspiegel oder Strahlteilerspiegel ist ein halbdurchlässiger Spiegel, dessen Spiegelfläche einen Teil des Empfangslichts durchlässt und einen anderen Teil reflektiert. Ein Teilerwürfel oder Strahlteilerwürfel besteht aus zwei Prismen, die an Ihrer Basis zusammengekittet sind, wobei diese Grenzfläche zwischen den beiden Prismen die Strahlteilung bewirkt. Oftmals hängt das Teilungsverhältnis der beiden Lichtaustrittspfade von der Wellenlänge des Empfangslichts ab.

Ein Nachteil derartiger herkömmlicher Strahlteiler besteht in den nicht unerheblichen Herstellungskosten und im benötigten Bauraum, da der Strahlteiler in der Regel in einem Winkel von 45° zu dem Lichteintrittspfad geneigt angeordnet werden muss.

Es ist die Aufgabe der Erfindung, ein verbessertes Strahlteilungsprisma anzugeben.

Die Lösung der Aufgabe erfolgt durch ein Strahlteilungsprisma mit den Merkmalen des Anspruchs 1. Ein erfindungsgemäßes Strahlteilungsprisma umfasst einen transparenten Körper, welcher einen Lichteintrittspfad, der zwischen einem Lichteintrittsbereich und einem Strahlteilungsbereich vorgesehen ist, und zumindest zwei, in unterschiedliche Raumrichtungen verlaufende Lichtaustrittspfade aufweist, wobei der Strahlteilungsbereich mehrere Auskoppelflächen aufweist, welche zumindest bezüglich ihrer geometrischen Eigenschaften teilweise unterschiedlich ausgestaltet und dazu eingerichtet sind, in Abhängigkeit von ihren geometrischen Eigenschaften unmittelbar über dem Lichteintrittspfad eintretendes Licht in einen der Lichtaustrittspfade zu leiten.

Der Strahlteilungsbereich, welcher bei einem herkömmlichen Strahlteiler der Spiegelfläche eines Teilerspiegels bzw. der Kittfläche der beiden Prismen eines Teilerwürfels entspricht, ist bei dem erfindungsgemäßen Strahlteilungsprisma in mehrere Auskoppelflächen unterteilt, wobei diese Auskoppelflächen eine selektive Aufteilung des Empfangslichts auf die verschiedenen Lichtaustrittspfade insbesondere auf der Grundlage ihrer unterschiedlichen geometrischen Eigenschaften bewirken. Ein Vorteil besteht darin, dass damit prinzipiell eine Strahlteilung ohne Wellenlängenselektivität erfolgen kann, wobei jedoch durch geeignete Maßnahmen bei Bedarf auch eine Wellenlängenselektivität hergestellt werden kann. Dies wird nachfolgend noch näher beschrieben. Unter unmittelbar einfallendem Licht wird insbesondere Licht verstanden, welches ohne vorherige Reflexion an anderen Grenzflächen des transparenten Körpers auf eine der Auskoppelflächen trifft. Grundsätzlich kann jedoch dieses unmittelbar einfallende Licht an der Lichteintrittsfläche gebrochen werden, was nachfolgend ebenfalls noch näher erläutert wird. Der Strahlteilungsbereich kann neben den genannten Auskoppelflächen auch weitere Teilflächen aufweisen, welche nicht mit Licht beaufschlagt werden oder mittelbar auftreffendes Licht, d.h. Lichtstrahlen, die zuvor bereits von einer Auskoppelfläche umgelenkt wurden, transmittiert. Diese Teilflächen werden nicht zu den Auskoppelflächen gerechnet.

Der Begriff "Strahlteilungsprisma" ist nicht in einer Weise einschränkend zu verstehen, dass dieses nur für eine Aufteilung des Lichteintrittspfads auf die mehreren Lichtaustrittspfade verwendet werden kann. Grundsätzlich kann ein erfindungsgemäßes Strahlteilungsprisma auch in Anwendungen eingesetzt werden, bei denen zumindest teilweise eine Strahlumkehr verwirklicht ist, d.h., in einer Weise, dass die mehreren Lichtaustrittspfade mehrere Lichteintrittspfade und der eine Lichteintrittspfad einen einzigen Lichtaustrittspfad bilden. Das erfindungsgemäße Strahlteilungsprisma wird hier also quasi "umgekehrt" eingesetzt. Ein Beispiel für eine solche Anwendung kann beispielsweise vorsehen, dass von zwei Lichtquellen emittierte Strahlenbündel über die erfindungsgemäßen Lichtaustrittspfade in das Strahlteilungsprisma eintreten und im Strahlteilungsbereich zu einem einzelnen Strahlenbündel vereinigt werden, welches das Strahlteilungsprisma über den erfindungsgemäßen Lichteintrittsbereich verlässt. Nachdem die oben zuerst beschriebene Anwendung sehr vorteilhaft einsetzbar ist und eine Hauptanwendung darstellt, wurde trotz der hier beschriebenen möglichen umgekehrten Anwendung mit umgekehrtem Strahlungsweg zur einfacheren und konsistenten Darstellung eine Nomenklatur gewählt, die auch in den Figuren Niederschlag gefunden hat und zum Beispiel auf den Begriffen "Lichteintrittspfad", "Lichtaustrittspfad" und "Auskoppel"-fläche beruht und insofern den Strahlungsweg in der Hauptanwendung des Strahlteilungsprismas widerspiegelt.

Gemäß einer bevorzugten Ausführungsform sind zumindest ein Teil der Auskoppelflächen als Reflexionsflächen ausgebildet, welche dazu eingerichtet sind, unmittelbar über dem Lichteintrittspfad eintretendes Licht zu einem jeweiligen Lichtaustrittspfad umzulenken. Die Strahlbeeinflussung der als Reflexionsflächen ausgebildeten Auskoppelflächen beruht somit auf dem Prinzip der Reflexion. In Abhängigkeit vom durch die Geometrie der Reflexionsflächen bestimmten Auftreffwinkel der Lichtstrahlen auf die Reflexionsflächen kann an diesen eine teilweise Reflexion oder eine Totalreflexion erfolgen.

Gemäß einer weiteren bevorzugten Ausführungsform ist ein Teil der Auskoppelflächen als Transmissionsflächen ausgebildet, welche dazu eingerichtet sind, unmittelbar über den Lichteintrittspfad eintretendes Licht zu transmittieren. Diese Transmissionsflächen ermöglichen somit einen Durchtritt des Empfangslichts, wobei wiederum die durch die Geometrie der Transmissionsflächen bestimmten Auftreffwinkel der Lichtstrahlen auf die Transmissionsflächen maßgeblich für die Transmissionscharakteristiken (z.B. Transmissionsgrad, Brechungswinkel) sind.

Gemäß einer abgewandelten bevorzugten Ausführungsform sind alle Auskoppelflächen als Transmissionsflächen ausgebildet. Hierbei erfolgt eine Aufteilung des Empfangslichts auf die verschiedenen Lichtaustrittspfade bevorzugt aufgrund unterschiedlicher Neigungswinkel der Transmissionsflächen.

Gemäß einer weiteren bevorzugten Ausführungsform unterscheiden sich die Reflexionsflächen von den Transmissionsflächen hinsichtlich des Neigungswinkels. Der Neigungswinkel ist hierbei eine der genannten geometrischen Eigenschaften der Auskoppelflächen. Der Neigungswinkel kann sich auf eine vorgegebene Referenzfläche beziehen, zum Beispiel eine Lichteintrittsfläche oder eine sonstige Begrenzungsfläche des transparenten Körpers. Grundsätzlich kann sich der Neigungswinkel auch auf andere geeignete Referenzflächen oder Referenzachsen beziehen, welche beispielsweise mit Bezug auf optische Achsen des Lichteintrittspfads und/oder eines der Lichtaustrittspfade definiert sein können. Der Neigungswinkel definiert insbesondere, ob eine Auskoppelfläche in Abhängigkeit von dem resultierenden Auftreffwinkel der einfallenden Lichtstrahlen als Reflexionsfläche oder als Transmissionsfläche wirkt.

Die unterschiedlichen Neigungswinkel der Reflexionsflächen und der Transmissionsflächen können zum Beispiel bei einer beispielhaften Ausgestaltung eines Strahlteilungsprismas mit genau zwei Lichtaustrittspfaden bewirken, dass das von den Transmissionsflächen transmittierte Licht in den einen Lichtaustrittspfad und das von den Reflexionsflächen reflektierte Empfangslicht in den anderen Lichtaustrittspfad geleitet wird.

Gemäß einer weiteren bevorzugten Ausführungsform sind alle Auskoppelflächen als Reflexionsflächen ausgebildet. Dies stellt eine Alternative zu der vorstehend genannten Ausführungsform eines Strahlteilungsprismas dar, welches sowohl Transmissionsflächen als auch Reflexionsflächen aufweist. Es versteht sich, dass bei einem Strahlteilungsprisma, welches nur Reflexionsflächen aufweist, diese Reflexionsflächen zumindest zwei unterschiedliche Neigungswinkel aufweisen müssen, um eine Strahlteilung zu bewirken.

Gemäß einer weiteren bevorzugten Ausführungsform sind die Auskoppelflächen in Abhängigkeit von ihrem Neigungswinkel zumindest einer ersten und einer zweiten, bevorzugt auch einer dritten Gruppe, zugeordnet, wobei sich die Gruppen hinsichtlich des Neigungswinkels der zugeordneten Auskoppelflächen voneinander unterscheiden. Beispielsweise können bei einem Strahlteilungsprisma, welches als Auskoppelflächen sowohl Transmissionsflächen als auch Reflexionsflächen aufweist, die Transmissionsflächen der ersten Gruppe und die Reflexionsflächen der zweiten Gruppe zugeordnet werden. In einer gegebenenfalls vorhandenen dritten Gruppe können dann z.B. diejenigen Reflexionsflächen zusammengefasst werden, deren Neigungswinkel sich von dem Neigungswinkel der der zweiten Gruppe zugeordneten Reflexionsflächen unterscheidet. Jede Gruppe lenkt das Empfangslicht zu einem anderen Lichtaustrittspfad. Somit weist beispielsweise ein Strahlteilungsprisma mit drei Gruppen von Auskoppelflächen auch drei Lichtaustrittspfade auf.

Gemäß einer weiteren bevorzugten Ausführungsform unterscheiden sich die Neigungswinkel der Auskoppelflächen einer jeweiligen Gruppe innerhalb eines jeweiligen Winkelbereichs, wobei die Winkelbereiche der verschiedenen Gruppen einander nicht überlappen. Somit können sich beispielsweise die Neigungswinkel der Transmissionsflächen innerhalb eines ersten Winkelbereichs und die Neigungswinkel der Reflexionsflächen zumindest innerhalb eines zweiten Winkelbereichs unterscheiden. Auf diese Weise kann über die Gesamtheit der Auskoppelflächen einer jeweiligen Gruppe durch die unterschiedlichen Neigungswinkel eine Strahlformung, insbesondere eine Fokussierung erreicht werden. Grundsätzlich müssen die Neigungswinkel nicht in allen Gruppen variieren.

Gemäß einer weiteren bevorzugten Ausführungsform sind im Strahlteilungsbereich zumindest in einer ersten Richtung abwechselnd bezüglich ihrer geometrischen Eigenschaften, bevorzugt bezüglich ihres Neigungswinkels, unterschiedlich ausgestaltete Auskoppelflächen angeordnet. So kann bei einer Ausgestaltung, bei welcher sich die Auskoppelflächen nur in einer Richtung abwechseln, ein Linienmuster zum Beispiel aus sich abwechselnden Reflexionsflächen und Transmissionsflächen vorgesehen sein. Bei einer Ausgestaltung, bei welcher sich die Auskoppelflächen in zwei Richtungen abwechseln, kann beispielsweise eine Art Schachbrettmuster aus Reflexionsflächen und Transmissionsflächen vorgesehen sein. Bei einer Ausführungsform des Strahlteilungsprismas, welches nur Reflexionsflächen aufweist, können in entsprechender Weise abwechselnd Reflexionsflächen mit unterschiedlichen Neigungswinkeln vorgesehen sein. Die abwechselnde Anordnung der Auskoppelflächen kann in entsprechender Weise auch auf eine Ausführungsform eines Strahlteilungsprismas mit drei oder mehr Lichtaustrittspfaden übertragen werden, welches zum einen Transmissionsflächen und zum anderen Reflexionsflächen mit zwei oder mehr unterschiedlichen Neigungswinkeln aufweist.

Gemäß einer weiteren bevorzugten Ausführungsform weisen die Auskoppelflächen strahlformende Eigenschaften auf und sind bevorzugt jeweils in einer oder in zwei Richtungen konvex oder konkav gekrümmt. Bei dieser Ausführungsform können demnach die Transmissionsflächen als Sammel- oder Zerstreuungslinsen bzw. die Reflexionsflächen als konkave oder konvexe Spiegel ausgebildet sein. Entsprechend der Art der Krümmung können die Auskoppelflächen zylindrisch, sphärisch oder asphärisch gekrümmt sein oder auch als Freiformflächen ausgestaltet sein. Die genannten strahlformenden Eigenschaften, insbesondere die Krümmungsrichtung und der Krümmungsradius, können als Teil der vorstehend genannten geometrischen Eigenschaften der Auskoppelflächen betrachtet werden.

Gemäß einer weiteren bevorzugten Ausführungsform weist der Lichteintrittsbereich eine strahlformende Lichteintrittsfläche auf. Unter einer strahlformenden Lichteintrittsfläche wird insbesondere eine konvex oder konkav gekrümmte Grenzfläche verstanden, welche insbesondere als sphärische oder asphärische Linse oder als Zylinderlinse ausgebildet sein kann. Bei dieser besonders vorteilhaften Ausführungsform sind zwei Funktionen, die bei herkömmlichen Anordnungen mit Strahlteilerspiegeln oder -würfeln zwei separate optische Elemente erfordern, in einem einzigen Bauelement vereinigt, nämlich eine Linse und ein Strahlteiler. Auf diese Weise können bei optoelektronischen Sensoren oder anderen Anwendungen sowohl die Materialkosten als auch die Montagekosten gesenkt werden. Zudem reduziert sich aufgrund der kompakteren Bauweise der Platzbedarf. Ein weiterer Vorteil eines derartigen integrierten strahlformenden, insbesondere abbildenden, Strahlteilungsprismas ergibt sich aus der Reduzierung der Grenzflächen, da im Vergleich zu einer herkömmlichen Lösung mit getrennten Bauelementen (Linse und Strahlteiler) zumindest die Lichtaustrittsfläche der Linse als Grenzfläche entfällt. Hierdurch können insbesondere auch reflexionsbedingte Fehlfunktionen von optoelektronischen Anordnungen, welche mit einem derartigen integrierten strahlformenden Strahlteilungsprisma ausgestattet sind, vermieden werden.

Gemäß einer weiteren bevorzugten Ausführungsform verläuft zumindest einer der Lichtaustrittspfade zwischen dem Strahlteilungsbereich und einem Lichtaustrittsbereich, welcher eine strahlformende Lichtaustrittsfläche aufweist. Die strahlformende Lichtaustrittsfläche kann analog zu der strahlformenden Lichteintrittsfläche als eine konvex oder konkav gekrümmte Grenzfläche ausgebildet sein, insbesondere als sphärische oder asphärische Linse oder als Zylinderlinse. Hierdurch kann alternativ oder zusätzlich zu der strahlformenden Lichteintrittsfläche zumindest in einem Teil der Lichtaustrittspfade eine weitere Strahlformung erfolgen.

Gemäß einer weiteren bevorzugten Ausführungsform unterscheiden sich jeweilige, bezüglich ihrer geometrischen Eigenschaften unterschiedlich ausgestaltete Auskoppelflächen zusätzlich hinsichtlich ihrer Oberflächeneigenschaften, wobei zumindest ein Teil der Auskoppelflächen eine jeweilige optisch wirksame Beschichtung aufweist. Bei der optisch wirksamen Beschichtung kann es sich beispielsweise um eine Antireflexionsbeschichtung oder eine Filterschicht, beispielsweise eine dichroitische Filterschicht, auf den Reflexionsflächen bzw. auf den Transmissionsflächen handeln. Beispielsweise kann auf den Transmissionsflächen eine wellenlängenselektive Transmissionsfilterschicht aufgebracht sein, welche sich zur Vereinfachung des Fertigungsprozesses grundsätzlich auch über alle Auskoppelflächen, d.h. auch über die Reflexionsflächen erstrecken kann, sofern deren Reflexionseigenschaften von einer solchen Transmissionsfilterschicht zumindest nur unwesentlich beeinflusst werden, also insbesondere dann, wenn die Reflexion an der Reflexionsfläche auf Totalreflexion beruht.

Gemäß einer weiteren bevorzugten Ausführungsform ist der transparente Körper massiv und bevorzugt aus einem homogenen Material hergestellt. Als Material kann beispielsweise Kunststoff, beispielsweise Polymethylmethacrylat (PMMA) oder Polycarbonat, oder Glas verwendet werden. Ein solcher transparenter Körper kann auf kostengünstige Weise zum Beispiel im Spritzgussverfahren hergestellt werden. Grundsätzlich ist jedoch auch eine Ausgestaltung des transparenten Körpers als Hohlkörper möglich.

Die vorliegende Erfindung betrifft in einem weiteren Aspekt einen Lichttaster mit den Merkmalen des Anspruchs 14 und insbesondere einen Lichttaster mit einem Lichtsender zum Aussenden von Sendelicht in eine Detektionszone, und zumindest einem ersten und einen zweiten Lichtempfänger, welche zum Empfangen von Empfangslicht aus der Detektionszone, das von einem zu detektierenden Objekt spiegelnd oder diffus reflektiert wird, und zum Erzeugen von Empfangssignalen aus dem Empfangslicht ausgelegt sind, wobei im Strahlengang vor den Lichtempfängern ein Strahlteilungsprisma nach einer der vorstehend beschriebenen erfindungsgemäßen oder bevorzugten Ausführungsformen angeordnet ist, wobei jedem Lichtempfänger einer der Lichtaustrittspfade des Strahlteilungsprismas zugeordnet ist, so dass in das Strahlteilungsprisma eintretendes Empfangslicht zu einem Teil zu dem ersten Lichtempfänger und einem anderen Teil zu dem zweiten Lichtempfänger gelenkt wird, wobei jeder Lichtempfänger eine wirksame Empfangsfläche aufweist, wobei die wirksame Empfangsfläche des zweiten Lichtempfängers kleiner ist als die wirksame Empfangsfläche des ersten Lichtempfängers, so dass das Verhältnis zwischen dem von dem ersten Lichtempfänger erzeugten Empfangssignal und dem von dem zweiten Lichtempfänger erzeugten Empfangssignal von der Tastweite des detektierten Objekts abhängt.

Bei dem erfindungsgemäßen Lichttaster wird ausgenutzt, dass ein jeweiliger Lichtfleck, der durch das reflektierte Empfangslicht auf den Lichtempfängern erzeugt wird, einen minimalen Durchmesser bzw. Querschnitt aufweist, wenn sich das detektierte Objekt innerhalb der Nenntastweite befindet. Mit der Nenntastweite wird diejenige Tastweite bezeichnet, für die der Lichttaster ausgelegt ist. Befindet sich das Objekt außerhalb der Nenntastweite, vergrößert sich der Lichtfleck, was dazu führt, dass sich die Bestrahlungsstärke auf dem Lichtempfänger, d.h. die Leistung des Empfangslichts pro Flächeneinheit, verringert. Die Größe der zweiten Empfangsfläche ist dabei so gewählt, dass eine Aufweitung des in Richtung des zweiten Lichtempfängers reflektierten Empfangslichts, die durch die Abweichung von der Nenntastweite des Lichttasters bedingt ist, dazu führt, dass nur noch ein Teilquerschnitt des Empfangslichts detektiert wird, was zu einer Abnahme der entsprechenden Empfangssignalstärke führt. Die unterschiedlich großen wirksamen Empfangsflächen der Lichtempfänger führen dazu, dass sich diese Abnahme der Signalintensität bei dem ersten Lichtempfänger vergleichsweise weniger stark auf die Signalhöhe auswirkt als bei dem zweiten Lichtempfänger. Die wirksame Empfangsfläche des ersten Lichtempfängers wird dabei vorteilhafterweise so bemessen, dass zumindest innerhalb des vorgesehenen Tastweitenbereichs, für den der Lichttaster ausgelegt ist, zumindest ein wesentlicher Teil des Empfangslichts auf die wirksame Empfangsfläche des ersten Lichtempfängers fällt. Das Verhältnis der Empfangssignale hängt hauptsächlich von der Tastweite ab, der Einfluss der Reflexionseigenschaften des detektierten Objekts ist vernachlässigbar. Daher können aus dem Verhältnis der Empfangssignale Informationen über die Tastweite bzw. Abweichung von der Nenntastweite gewonnen werden. Diese Informationen können dazu genutzt werden, Änderungen der Tastweite bei der Auswertung der Erfassungssignale zu berücksichtigen.

Es hat sich gezeigt, dass das erfindungsgemäße Strahlteilungsprisma bei einem Lichttaster der genannten Art in besonders vorteilhafter und kostensparender Weise eingesetzt werden kann. Ein zusätzlicher Vorteil ergibt sich, wenn ein Strahlteilungsprisma verwendet wird, welches gemäß einer der vorstehend beschriebenen bevorzugten Ausführungsformen eine strahlformende Lichteintrittsfläche und/oder eine strahlformende Lichtaustrittsfläche aufweist.

Weitere Vorteile des erfindungsgemäßen Strahlteilungsprismas und des erfindungsgemäßen Lichttasters ergeben sich aus der folgenden Zeichnungsbeschreibung. Insbesondere bewirkt die Verwendung vorteilhafter Ausführungsformen des erfindungsgemäßen Strahlteilungsprismas auch vorteilhafte Ausführungsformen des erfindungsgemäßen Lichttasters.

In den Zeichnungen sind Ausführungsbeispiele der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und/oder zu sinnvollen weiteren Kombinationen zusammenfassen.

Es zeigen:
- Fig. 1: einen schematischen Querschnitt eines Strahlteilungsprismas gemäß einem ersten Ausführungsbeispiel;
- Fig. 2: eine perspektivische Ansicht des Strahlteilungsprismas der Fig. 1;
- Fig. 3 bis 5: schematische Querschnitte von Strahlteilungsprismen gemäß einem zweiten bis vierten Ausführungsbeispiel; und
- Fig. 6: einen schematischen Querschnitt eines Lichttasters gemäß einem Ausführungsbeispiel.

Im Folgenden werden gleiche oder gleichartige Elemente mit den gleichen Bezugszeichen bezeichnet.

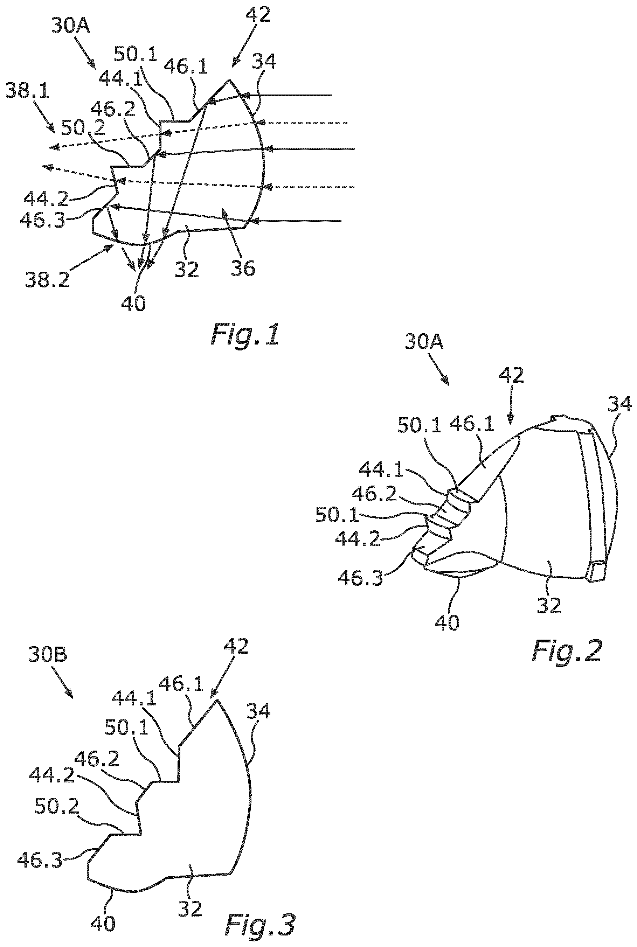

Fig. 1 zeigt ein Strahlteilungsprisma 30A gemäß einem ersten Ausführungsbeispiel. Das Strahlteilungsprisma 30A umfasst einen transparenten Körper 32, welcher beispielsweise mittels eines Spritzgussverfahrens aus einem transparenten Kunststoffmaterial hergestellt sein kann. Der transparente Körper 32 weist einen Lichteintrittsbereich mit einer Lichteintrittsfläche 34 und einen Lichtaustrittsbereich mit einer Lichtaustrittsfläche 40 auf. Die Lichteintrittsfläche 34 und die Lichtaustrittsfläche 40 sind konvex gewölbt und bilden jeweilige Sammellinsen, deren Hauptflächen annähernd in einem rechten Winkel zueinander stehen und als jeweiliger Teil einer ersten und einer zweiten Begrenzungsfläche des Strahlteilungsprismas 30A angesehen werden können.

Eine dritte Begrenzungsfläche des Strahlteilungsprismas 30A ist als ein Strahlteilungsbereich 42 ausgebildet, welcher schräg zur ersten und zweiten Begrenzungsfläche verläuft, so dass der Querschnitt des Strahlteilungsprismas 30A näherungsweise die Form eines rechtwinkligen Dreiecks mit dem Strahlteilungsbereich 42 als Basis und der ersten und der zweiten Begrenzungsfläche als Schenkel aufweist. Der Strahlteilungsbereich 42 ist in mehrere kleinere Flächen unterteilt, welche unterschiedliche Neigungswinkel aufweisen und somit auch verschiedene Funktionen bei der Strahlteilung erfüllen.

In das Strahlteilungsprisma 30A eintretendes Licht wird an der Lichteintrittsfläche 34 zunächst gebrochen, wobei auf Grund ihrer konvexen Wölbung eine konvergente Strahlbündelung erfolgt. Das derart gebündelte eintretende Licht wird entlang eines Lichteintrittspfads 36 in Richtung des Strahlteilungsbereichs 42 geleitet und trifft dort auf eine der verschiedenen Flächen.

Ein Teil der Flächen des Strahlteilungsbereichs 42 sind als Transmissionsflächen 44.1, 44.2 ausgebildet und dazu eingerichtet, unmittelbar über den Lichteintrittspfad 36 eintretendes Licht in Richtung eines ersten Lichtaustrittspfads 38.1 zu transmittieren.

Ein weiterer Teil der Flächen des Strahlteilungsbereichs 42 sind als Reflexionsflächen 46.1, 46.2, 46.3 ausgebildet und dazu eingerichtet, unmittelbar über den Lichteintrittspfad 36 eintretendes Licht in Richtung eines zweiten Lichtaustrittspfads 38.2 umzulenken. Während der erste Lichtaustrittspfad 38.1 außerhalb des Strahlteilungsprismas 30A verläuft, verläuft der zweite Lichtaustrittspfad 38.2 teilweise innerhalb des Strahlteilungsprismas 30A. Beim Durchtritt durch die konvex gewölbte Lichtaustrittsfläche 40 erfolgt hierbei eine weitere Lichtbündelung. Die transmittierten Lichtstrahlen sind hier schematisch durch gestrichelte Pfeillinien dargestellt, während die reflektierten Lichtstrahlen durch durchgezogene Pfeillinien repräsentiert sind.

Die Transmissionsflächen 44.1, 44.2 und die Reflexionsflächen 46.1 bis 46.3 werden als Auskoppelflächen bezeichnet, da sie unmittelbar einfallendes Licht in Abhängigkeit von ihrer Position innerhalb des Strahlteilungsbereichs 42 das Licht in einen der Lichtaustrittspfade 38.1, 38.2 auskoppeln.

Der Strahlteilungsbereich 42 weist noch zwei weitere Teilflächen 50.1, 50.2 auf, welche im Ausführungsbeispiel von Fig. 1 weder eine strahlteilende Funktion noch eine sonstige lichtführende Funktion aufweisen.

Der wesentliche Unterschied zwischen den Transmissionsflächen 44.1, 44.2 und den Reflexionsflächen 46.1 bis 46.3 besteht in ihrer jeweiligen Geometrie. Während der Neigungswinkel der Transmissionsflächen 44.1, 44.2 so gewählt ist, dass das eintretende Licht mehr oder weniger senkrecht auf die Transmissionsflächen 44.1, 44.2 fällt, sind die Neigungswinkel der Reflexionsflächen 46.1 bis 46.3 so gewählt, dass das eintretende Licht unter einem schrägen Winkel auftrifft und daher zumindest größtenteils reflektiert wird. In Abhängigkeit von den gewählten Winkelgeometrien und dem Brechungsindex des transparenten Körpers 36 kann eine Teilreflexion oder auch eine Totalreflexion erfolgen.

Im Strahlteilungsbereich 42 sind die verschiedenen Typen von Auskoppelflächen abwechselnd angeordnet, d.h. bezogen auf die Darstellung von Fig. 1 ist in einer Reihenfolge zunächst die Reflexionsfläche 46.1, anschließend die Transmissionsfläche 44.1, anschließend die Reflexionsfläche 46.2, anschließend die Transmissionsfläche 44.2 und zuletzt die Reflexionsfläche 46.3 vorgesehen. Die optisch funktionslosen Teilflächen 50.1, 50.2 sind in dieser Reihung außer Betracht gelassen.

Während die Neigungswinkel aller Reflexionsflächen 46.1 bis 46.3 gleich sind, variieren die Neigungswinkel der Transmissionsflächen 44.1, 44.2 etwas untereinander. Aufgrund der etwas unterschiedlichen Brechung der durchtretenden Lichtstrahlen in Abhängigkeit von diesem Neigungswinkelunterschied erfolgt eine zusätzliche konvergente Lichtbündelung im ersten Lichtaustrittspfad 38.1.

Ein weiterer Unterschied zwischen Transmissionsflächen 44.1, 44.2 und den Reflexionsflächen 46.1 bis 46.3 wird aus Fig. 2 ersichtlich, welche eine perspektivische Ansicht des Strahlteilungsprismas 30A von Fig. 1 darstellt. Während die Reflexionsflächen 46.1 bis 46.3 plan sind, weisen die Transmissionsflächen 44.1, 44.2 eine konvexe zylindrische Krümmung auf. Hierdurch kann zusätzlich zu der in Fig. 1 dargestellten konvergenten Bündelung in der Zeichenebene ergänzend eine konvergente Lichtbündelung senkrecht zur Zeichenebene erreicht werden.

Nachfolgend wird mit Bezug auf Fig. 3 ein Strahlteilungsprisma 30B gemäß einem zweiten Ausführungsbeispiel beschrieben. Da das Strahlteilungsprisma 30B (Fig. 3) dem Strahlteilungsprisma 30A (Fig. 1) ähnelt, werden nachfolgend nur die wesentlichen Unterschiede erläutert.

Der Strahlteilungsbereich 42 des Strahlteilungsprismas 30B weist im Vergleich zum Strahlteilungsbereich 42 des Strahlteilungsprismas 30A sozusagen eine inverse oder komplementäre Struktur auf. Während beim Strahlteilungsprisma 30A die zackenförmigen Strukturen, die von den Flächen 50.1 und 44.1 bzw. den Flächen 50.2 und 44.2 umgrenzt sind, nach außen gestülpt sind, sind diese Strukturen beim Strahlteilungsprisma 30B nach innen eingestülpt, so dass im Wesentlichen die Flächen 44.1 und 50.1 bzw. 44.2 und 50.2 in ihrer Reihenfolge vertauscht sind. In funktionaler Hinsicht ergeben sich hierfür keine wesentlichen Unterschiede, so dass auf eine Darstellung der jeweiligen Lichtpfade verzichtet wurde.

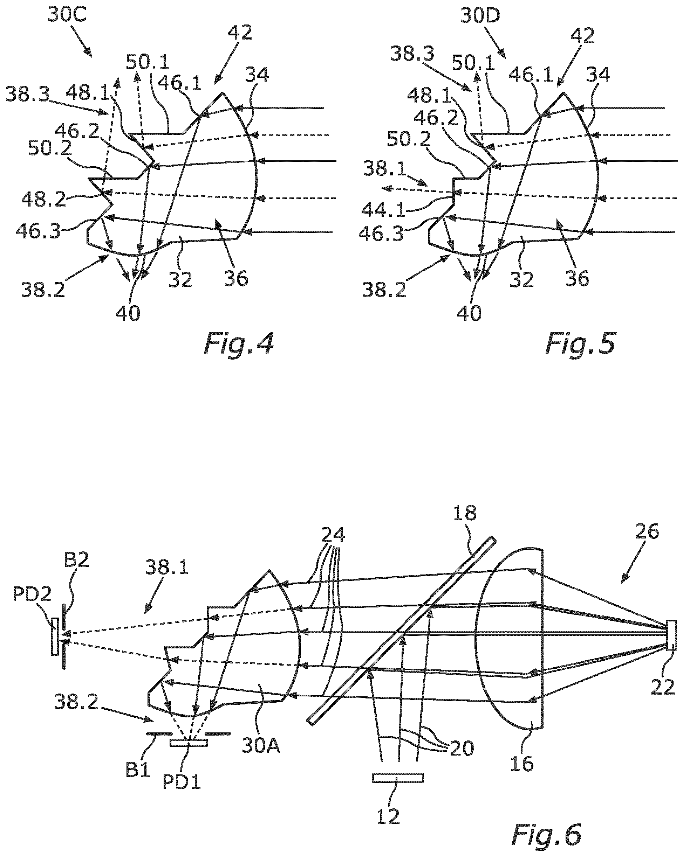

Mit Bezug auf Fig. 4 wird ein Strahlteilungsprisma 30C gemäß einem dritten Ausführungsbeispiel beschrieben. Auch hier werden nur die wesentlichen Unterschiede zum Strahlteilungsprisma 30A von Fig. 1 erläutert.

Ähnlich wie beim Ausführungsbeispiel von Fig. 1 umfasst das Strahlteilungsprisma 30C eine erste Gruppe von Reflexionsflächen 46.1 bis 46.3. Im Unterschied zum Ausführungsbeispiel von Fig. 1 weist jedoch der Strahlteilungsbereich 42 der Fig. 4 keine Transmissionsflächen entsprechend den in Fig. 1 erkennbaren Transmissionsflächen 44.1 und 44.2 auf, sondern stattdessen eine zweite Gruppe von Reflexionsflächen 48.1, 48.2. Die zweite Gruppe von Reflexionsflächen 48.1, 48.2 weist einen wesentlich anderen Neigungswinkel als die erste Gruppe von Reflexionsflächen 46.1 bis 46.3 auf. Während die erste Gruppe von Reflexionsflächen 46.1 bis 46.3 das unmittelbar eintretende Licht ähnlich wie beim Ausführungsbeispiel von Fig. 1 in Richtung des zweiten Lichtaustrittspfads 38.2 umlenkt, lenken die Reflexionsflächen 48.1, 48.2 der zweiten Gruppe das unmittelbar einfallende Licht in Richtung eines dritten Lichtaustrittspfads 38.3 um, welcher in eine dem zweiten Lichtaustrittspfad 38.2 annähernd entgegengesetzte Richtung verläuft. Das in den dritten Lichtaustrittspfad 38.3 umgelenkte Licht tritt hierbei im Bereich der Teilflächen 50.1 bzw. 50.2 aus dem transparenten Körper 36 aus. In diesem Ausführungsbeispiel weisen die Teilflächen 50.1 bzw. 50.2 keine strahlformenden Eigenschaften auf, was aber grundsätzlich möglich wäre.

Mit Bezug auf Fig. 5 wird nachfolgend ein Strahlteilungsprisma 30D gemäß einem vierten Ausführungsbeispiel beschrieben. Das Strahlteilungsprisma 30D stellt sozusagen eine Kombination der Strahlteilungsprismen 30A (Fig. 1) und 30C (Fig. 4) dar, so dass auch hier nur die wesentlichen Unterschiede beschrieben werden.

Das Strahlteilungsprisma 30D umfasst neben den Reflexionsflächen 46.1 bis 46.3, welche ähnlich wie bei den Strahlteilungsprismen 30A (Fig. 1) und 30C (Fig. 2) angeordnet sind, zusätzlich eine Transmissionsfläche 44.1 und eine weitere Reflexionsfläche 48.1, deren Neigungswinkel sich erheblich von den Neigungswinkeln der Reflexionsflächen 46.1 bis 46.3 unterscheiden. Die Transmissionsfläche 44.1 leitet unmittelbar eintretendes Licht in Richtung des ersten Lichtaustrittspfads 38.1, während die Reflexionsflächen 46.1 bis 46.3 unmittelbar eintretendes Licht in Richtung des zweiten Lichtaustrittspfads 38.2 und die Reflexionsfläche 48.1 unmittelbar eintretendes Licht in Richtung des dritten Lichtaustrittspfads 38.3 umlenken.

Die Anzahl und auch die Größe der jeweiligen Auskoppelflächen ist bei allen Ausführungsbeispielen nur beispielhaft. Sowohl die Anzahl der Transmissionsflächen 44.1, 44.2 als auch die Anzahl der Reflexionsflächen 46.1 bis 46.3 bzw. 48.1, 48.2 kann ebenso wie deren Größe oder das Verhältnis der Anzahlen je nach Anwendung anders gewählt werden. Beispielsweise kann die in den Ausführungsbeispielen gezeigte Anzahl der Auskoppelflächen um einen Faktor 10 oder mehr erhöht werden, wodurch sich die Winkelselektivität der Zuordnung zu den verschiedenen Lichtaustrittspfaden verringern lässt. Eine der Kantenlängen einer Auskoppelfläche kann durchaus zum Bespiel auch weniger als 100 µm betragen.

Nachfolgend wird mit Bezug auf Fig. 6 ein Lichttaster 10 beschrieben, welcher ein Strahlteilungsprisma 30A gemäß Fig. 1 aufweist. Der Lichttaster 10 umfasst eine Sammellinse 16, einen Strahlteilerspiegel 18, das Strahlteilungsprisma 30A sowie einen ersten Lichtempfänger PD1 und einen zweiten Lichtempfänger PD2. Den Lichtempfängern PD1, PD2 ist jeweils eine Blende B1 bzw. B2 zugeordnet. Die Lichtempfänger PD1, PD2 sind mit einer Auswerteeinheit (nicht dargestellt) verbunden.

Die lichtempfindlichen Flächen der Lichtempfänger PD1, PD2 stehen in einem rechten Winkel zueinander. Das Strahlteilungsprisma 30A ist zwischen den Lichtempfängern PD1, PD2 und dem Strahlteilerspiegel 18 angeordnet, während sich die Sammellinse 16 zwischen dem Strahlteilerspiegel 18 und einer Detektionszone 26 befindet. Anstelle des Strahlteilerspiegels 18 kann beispielsweise auch ein Strahlteilerwürfel vorgesehen sein.

Der Lichtsender 12 kann ein oder mehrere Lichtquellen, beispielsweise Laser oder Leuchtdioden, umfassen und sendet monochromes oder polychromes Sendelicht 20 in Richtung auf den Strahlteilerspiegel 18, welcher das Sendelicht 20 durch die als Objektivlinse dienende Sammellinse 16 in Richtung der Detektionszone 26 lenkt.

Ein Objekt 22, welches sich in der Detektionszone 26 befindet, reflektiert auftreffendes Sendelicht 20 diffus oder spiegelnd als Empfangslicht 24 zurück in Richtung des Lichttasters 10.

Das Empfangslicht 24 tritt durch die Sammellinse 16 und den Strahlteilerspiegel 18 hindurch und trifft auf das Strahlteilungsprisma 30A, welches einen Teil des Empfangslichts 24 in Richtung des ersten Lichtempfängers PD1 und einen anderen Teil in Richtung des zweiten Lichtempfängers PD2 lenkt. Das auf die Lichtempfänger PD1, PD2 auftreffende Empfangslicht 24 wird durch die Blenden B1, B2 beschnitten, wobei die Blenden B1, B2 im vorliegenden Fall die wirksame Empfangsfläche der Lichtempfänger PD1, PD2 definieren. Der Querschnitt der Blende B1 ist hier größer als der Querschnitt der Blende B2.

Das Empfangslicht 24 wird durch die aus der Sammellinse 16 und der ebenfalls als Sammellinse wirkenden konvex gewölbten Lichteintrittsfläche 34 des Strahlteilungsprismas 30A bestehenden Linsenkombination als jeweilige Lichtflecke auf die Lichtempfänger PD1, PD2 abgebildet, wobei in der Regel die Lichtflecke ihren kleinsten Durchmesser haben, wenn sich das Objekt 22 bei der Nenntastweite befindet. Wenn sich das Objekt 22 näher oder weiter vom Lichttaster 10 entfernt befindet, vergrößert sich der Durchmesser der Lichtflecke, während sich die Bestrahlungsstärke, d.h. die Leistung je Fläche, die auf die Lichtempfänger PD1, PD2 bzw. auf die Blenden B1, B2 trifft, verringert. Aufgrund der Aufweitung trifft ein Teil des einen, auf den Lichtempfänger PD2 auftreffenden Lichtflecks nunmehr auf die Blende B2, was zusammen mit der Abnahme der Bestrahlungsstärke letztlich zu einer Abnahme der auf den Lichtempfänger PD2 treffenden Lichtmenge führt. Da jedoch der Querschnitt der Blende B1 größer als der Querschnitt der Blende B2 ist, trifft auch nach einer Aufweitung der andere, von dem Lichtempfänger PD1 erfasste Lichtfleck vollständig oder zumindest zu einem Großteil auf den Lichtempfänger PD1. Die Blende B1 dient im Wesentlichen der Ausblendung von Störlicht.

Die Funktionsweise des Lichttasters 10 entspricht ansonsten dem in EP 3 130 941 B1 beschriebenen Lichttaster und weist vergleichbare Vorteile auf. Zur ergänzenden Erläuterung wird der Inhalt der EP 3 130 941 B1 durch Bezugnahme vollständig in die Offenbarung des vorliegenden Textes aufgenommen. Gegenüber dem in EP 3 130 941 B1 beschriebenen Lichttaster weist der erfindungsgemäße Lichttaster 10 aufgrund des Ersetzens der aus der ersten Sammellinse 16a und des ersten Strahlteilers 18a (Fig. 1 der EP 3 130 941 B1) bestehenden Baugruppe durch ein integriertes abbildendes Strahlteilungsprisma kompaktere Abmessungen und wegen der dadurch bedingten Reduktion der Anzahl an optischen Grenzflächen auch eine höhere Störsicherheit auf.

Gemäß nicht dargestellter Abwandlungen kann bei dem Lichttaster 10 anstelle Strahlteilungsprisma 30A auch ein Strahlteilungsprisma 30B, 30C oder 30D verwendet werden, wobei die Anordnung der Lichtempfänger PD1, PD2 einschließlich der zugeordneten Blenden B1, B2 entsprechend angepasst ist und ggf. bei Verwendung des Strahlteilungsprismas 30D auch ein dritter Lichtempfänger vorgesehen werden kann.

Gemäß einer weiteren, nicht dargestellten Abwandlung kann bei dem Lichttaster 10 zusätzlich auch die Kombination aus Sammellinse 16 und Strahlteilerspiegel 18 durch ein weiteres erfindungsgemäßes Strahlteilungsprisma 30A bis 30D ersetzt werden. Hierbei erfolgt in dem Bereich zwischen dem Lichtsender 12 und dem Strahlteilungsprisma 30A bis 30D eine gegenüber den bisher beschriebenen Verwendungen eine umgekehrte Strahlausbreitungsrichtung, d.h. dass insbesondere der entsprechende Bereich des Strahlteilungsprismas 30A bis 30D nicht als Lichtaustrittspfad, sondern als Lichteintrittspfad eingesetzt wird.

Gemäß weiteren, nicht dargestellten Abwandlungen können sich die Neigungswinkel der verschiedenen Auskoppelflächen bei den Strahlteilungsprismen 30A bis 30D nicht nur innerhalb der Zeichenebene, sondern auch in einer weiteren Raumrichtung voneinander unterscheiden, so dass ein Teil der Lichtaustrittspfade 38.1 bis 38.3 senkrecht oder schräg zur Zeichenebene verläuft. Angewandt auf den Lichttaster 10 könnte dementsprechend beispielsweise einer der Lichtempfänger PD1, PD2 senkrecht zur Zeichenebene beabstandet angeordnet sein, so dass dessen lichtempfindliche Fläche parallel zur Zeichenebene verläuft.

### Bezugszeichenliste

- 10: Lichttaster
- 12: Lichtsender
- 16: Sammellinse
- 18: Strahlteilerspiegel
- 20: Sendelicht
- 22: Objekt
- 24: Empfangslicht
- 26: Detektionszone
- 30A - 30D: Strahlteilungsprisma
- 32: transparenter Körper
- 34: Lichteintrittsfläche
- 36: Lichteintrittspfad
- 38.1 - 38.3: Lichtaustrittspfad
- 40: Lichtaustrittsfläche
- 42: Strahlteilungsbereich
- 44.1,44.2: Transmissionsfläche
- 46.1 - 46.3: Reflexionsfläche
- 48.1, 48.2: Reflexionsfläche
- 50.1, 50.2: Teilfläche

## Patentansprüche

1. Strahlteilungsprisma (30A - 30D), umfassend einen transparenten Körper (32), welcher einen Lichteintrittspfad (36), der zwischen einem Lichteintrittsbereich und einem Strahlteilungsbereich (42) vorgesehen ist, und zumindest zwei, in unterschiedliche Raumrichtungen verlaufende Lichtaustrittspfade (38.1 - 38.3) aufweist,
wobei der Strahlteilungsbereich (42) mehrere Auskoppelflächen (46.1 - 46.3, 48.1, 48.2, 44.1, 44.2) aufweist, welche zumindest bezüglich ihrer geometrischen Eigenschaften teilweise unterschiedlich ausgestaltet und dazu eingerichtet sind, in Abhängigkeit von ihren geometrischen Eigenschaften unmittelbar über den Lichteintrittspfad (36) eintretendes Licht in einen der Lichtaustrittspfade (38.1 - 38.3) zu leiten.

2. Strahlteilungsprisma (30A - 30D) nach Anspruch 1,
**dadurch gekennzeichnet,**
**dass** zumindest ein Teil der Auskoppelflächen als Reflexionsflächen (46.1 - 46.3, 48.1, 48.2) ausgebildet sind, welche dazu eingerichtet sind, unmittelbar über den Lichteintrittspfad (36) eintretendes Licht zu einem jeweiligen Lichtaustrittspfad (38.1 - 38.3) umzulenken.

3. Strahlteilungsprisma (30A - 30D) nach Anspruch 2,
**dadurch gekennzeichnet,**
**dass** ein Teil der Auskoppelflächen als Transmissionsflächen (44.1, 44.2) ausgebildet sind, welche dazu eingerichtet sind, unmittelbar über den Lichteintrittspfad (36) eintretendes Licht zu transmittieren.

4. Strahlteilungsprisma (30A - 30D) nach Anspruch 2 und 3,
**dadurch gekennzeichnet,**
**dass** sich die Reflexionsflächen (46.1 - 46.3, 48.1, 48.2) von den Transmissionsflächen (44.1, 44.2) hinsichtlich des Neigungswinkels unterscheiden.

5. Strahlteilungsprisma (30A - 30D) nach Anspruch 2,
**dadurch gekennzeichnet,**
**dass** alle Auskoppelflächen als Reflexionsflächen (46.1 - 46.3, 48.1, 48.2) ausgebildet sind.

6. Strahlteilungsprisma (30A - 30D) nach einem der vorhergehenden Ansprüche,
**dadurch gekennzeichnet,**
**dass** die Auskoppelflächen (46.1 - 46.3, 48.1, 48.2, 44.1, 44.2) in Abhängigkeit von ihrem Neigungswinkel zumindest einer ersten und einer zweiten Gruppe, bevorzugt auch einer dritten Gruppe, zugeordnet sind, wobei sich die Gruppen hinsichtlich des Neigungswinkels der zugeordneten Auskoppelflächen voneinander unterscheiden.

7. Strahlteilungsprisma (30A - 30D) nach Anspruch 6,
**dadurch gekennzeichnet,**
**dass** sich die Neigungswinkel der Auskoppelflächen (46.1 - 46.3, 48.1, 48.2, 44.1, 44.2) einer jeweiligen Gruppe innerhalb eines jeweiligen Winkelbereichs unterscheiden, wobei sich die Winkelbereiche der verschiedenen Gruppen einander nicht überlappen.

8. Strahlteilungsprisma (30A - 30D) nach einem der vorhergehenden Ansprüche,
**dadurch gekennzeichnet,**
**dass** im Strahlteilungsbereich (42) zumindest in einer ersten Richtung abwechselnd bezüglich ihrer geometrischen Eigenschaften, bevorzugt bezüglich ihres Neigungswinkels, unterschiedlich ausgestaltete Auskoppelflächen (46.1 - 46.3, 48.1, 48.2, 44.1, 44.2) angeordnet sind.

9. Strahlteilungsprisma (30A - 30D) nach einem der vorhergehenden Ansprüche,
**dadurch gekennzeichnet,**
**dass** die Auskoppelflächen (46.1 - 46.3, 48.1, 48.2, 44.1, 44.2) strahlformende Eigenschaften aufweisen und bevorzugt jeweils in einer oder in zwei Richtungen konvex oder konkav gekrümmt sind.

10. Strahlteilungsprisma (30A - 30D) nach einem der vorhergehenden Ansprüche,
**dadurch gekennzeichnet,**
**dass** der Lichteintrittsbereich eine strahlformende Lichteintrittsfläche (34) aufweist.

11. Strahlteilungsprisma (30A - 30D) nach einem der vorhergehenden Ansprüche,
**dadurch gekennzeichnet,**
**dass** zumindest einer der Lichtaustrittsbereiche eine strahlformende Lichtaustrittsfläche (40) aufweist.

12. Strahlteilungsprisma (30A - 30D) nach einem der vorhergehenden Ansprüche,
**dadurch gekennzeichnet,**
**dass** sich jeweilige, bezüglich ihrer geometrischen Eigenschaften unterschiedlich ausgestaltete Auskoppelflächen (46.1 - 46.3, 48.1, 48.2, 44.1, 44.2) zusätzlich hinsichtlich ihrer Oberflächeneigenschaften unterscheiden, wobei zumindest ein Teil der Auskoppelflächen (46.1 - 46.3, 48.1, 48.2, 44.1, 44.2) vorzugsweise eine jeweilige optisch wirksame Beschichtung aufweist.

13. Strahlteilungsprisma (30A - 30D) nach einem der vorhergehenden Ansprüche,
**dadurch gekennzeichnet,**
**dass** der transparente Körper (32) massiv ist und bevorzugt aus einem homogenen Material hergestellt ist.

14. Lichttaster (10) mit einem Lichtsender (12) zum Aussenden von Sendelicht (20) in eine Detektionszone (26), und mit zumindest einem ersten und einem zweiten Lichtempfänger (PD1, PD2), welche zum Empfangen von Empfangslicht (24) aus der Detektionszone (26), das von einem zu detektierenden Objekt (22) spiegelnd oder diffus reflektiert wird, und zum Erzeugen von Empfangssignalen aus dem Empfangslicht (24) eingerichtet sind, wobei im Strahlengang vor den Lichtempfängern (PD1, PD2) ein Strahlteilungsprisma (30A - 30D) nach einem der vorhergehenden Ansprüche angeordnet ist, wobei jedem Lichtempfänger (PD1, PD2) einer der Lichtaustrittspfade (38.1 - 38.3) des Strahlteilungsprismas (30A - 30D) zugeordnet ist, so dass in das Strahlteilungsprisma (30A - 30D) eintretendes Empfangslicht (24) zu einem Teil zu dem ersten Lichtempfänger (PD1) und einem anderen Teil zu dem zweiten Lichtempfänger (PD2) gelenkt wird, wobei jeder Lichtempfänger (PD1, PD2) eine wirksame Empfangsfläche aufweist, wobei die wirksame Empfangsfläche des zweiten Lichtempfängers (PD2) kleiner ist als die wirksame Empfangsfläche des ersten Lichtempfängers (PD1), so dass das Verhältnis zwischen dem von dem ersten Lichtempfänger (PD1) erzeugten Empfangssignal und dem von dem zweiten Lichtempfänger (PD2) erzeugten Empfangssignal von der Tastweite des detektierten Objekts (22) abhängt.

## Geänderte Patentansprüche

### Geänderte Patentansprüche gemäss Regel 137(2) EPÜ.

**1.** Strahlteilungsprisma (30A - 30D), umfassend einen transparenten Körper (32), welcher einen Lichteintrittspfad (36), der zwischen einem Lichteintrittsbereich und einem Strahlteilungsbereich (42) vorgesehen ist, und zumindest zwei, in unterschiedliche Raumrichtungen verlaufende Lichtaustrittspfade (38.1 - 38.3) aufweist,
wobei der Strahlteilungsbereich (42) mehrere Auskoppelflächen (46.1 - 46.3, 48.1, 48.2, 44.1, 44.2) aufweist, welche zumindest bezüglich ihrer geometrischen Eigenschaften teilweise unterschiedlich ausgestaltet und dazu eingerichtet sind, in Abhängigkeit von ihren geometrischen Eigenschaften unmittelbar über den Lichteintrittspfad (36) eintretendes Licht in einen der Lichtaustrittspfade (38.1 - 38.3) zu leiten,
wobei ein Teil der Auskoppelflächen als Reflexionsflächen (46.1 - 46.3, 48.1, 48.2) ausgebildet ist, welche dazu eingerichtet sind, unmittelbar über den Lichteintrittspfad (36) eintretendes Licht zu einem jeweiligen Lichtaustrittspfad (38.1 - 38.3) umzulenken,
**dadurch gekennzeichnet,**
**dass** ein Teil der Auskoppelflächen als Transmissionsflächen (44.1, 44.2) ausgebildet ist, welche dazu eingerichtet sind, unmittelbar über den Lichteintrittspfad (36) eintretendes Licht zu transmittieren.

**2.** Strahlteilungsprisma (30A - 30D) nach Anspruch 1,
**dadurch gekennzeichnet,**
**dass** sich die Reflexionsflächen (46.1 - 46.3, 48.1, 48.2) von den Transmissionsflächen (44.1, 44.2) hinsichtlich des Neigungswinkels unterscheiden.

**2.** Strahlteilungsprisma (30A - 30D) nach einem der vorhergehenden Ansprüche,
**dadurch gekennzeichnet,**
**dass** die Auskoppelflächen (46.1 - 46.3, 48.1, 48.2, 44.1, 44.2) in Abhängigkeit von ihrem Neigungswinkel zumindest einer ersten und einer zweiten Gruppe, bevorzugt auch einer dritten Gruppe, zugeordnet sind, wobei sich die Gruppen hinsichtlich des Neigungswinkels der zugeordneten Auskoppelflächen voneinander unterscheiden.

**3.** Strahlteilungsprisma (30A - 30D) nach Anspruch 2,
**dadurch gekennzeichnet,**
**dass** sich die Neigungswinkel der Auskoppelflächen (46.1 - 46.3, 48.1, 48.2, 44.1, 44.2) einer jeweiligen Gruppe innerhalb eines jeweiligen Winkelbereichs unterscheiden, wobei sich die Winkelbereiche der verschiedenen Gruppen einander nicht überlappen.

**4.** Strahlteilungsprisma (30A - 30D) nach einem der vorhergehenden Ansprüche,
**dadurch gekennzeichnet,**
**dass** im Strahlteilungsbereich (42) zumindest in einer ersten Richtung abwechselnd bezüglich ihrer geometrischen Eigenschaften, bevorzugt bezüglich ihres Neigungswinkels, unterschiedlich ausgestaltete Auskoppelflächen (46.1 - 46.3, 48.1, 48.2, 44.1, 44.2) angeordnet sind.

**5.** Strahlteilungsprisma (30A - 30D) nach einem der vorhergehenden Ansprüche,
**dadurch gekennzeichnet,**
**dass** die Auskoppelflächen (46.1 - 46.3, 48.1, 48.2, 44.1, 44.2) strahlformende Eigenschaften aufweisen und bevorzugt jeweils in einer oder in zwei Richtungen konvex oder konkav gekrümmt sind.

**6.** Strahlteilungsprisma (30A - 30D) nach einem der vorhergehenden Ansprüche,
**dadurch gekennzeichnet,**
**dass** der Lichteintrittsbereich eine strahlformende Lichteintrittsfläche (34) aufweist.

**7.** Strahlteilungsprisma (30A - 30D) nach einem der vorhergehenden Ansprüche,
**dadurch gekennzeichnet,**
**dass** zumindest einer der Lichtaustrittsbereiche eine strahlformende Lichtaustrittsfläche (40) aufweist.

**8.** Strahlteilungsprisma (30A - 30D) nach einem der vorhergehenden Ansprüche,
**dadurch gekennzeichnet,**
**dass** sich jeweilige, bezüglich ihrer geometrischen Eigenschaften unterschiedlich ausgestaltete Auskoppelflächen (46.1 - 46.3, 48.1, 48.2, 44.1, 44.2) zusätzlich hinsichtlich ihrer Oberflächeneigenschaften unterscheiden, wobei zumindest ein Teil der Auskoppelflächen (46.1 - 46.3, 48.1, 48.2, 44.1, 44.2) vorzugsweise eine jeweilige optisch wirksame Beschichtung aufweist.

**9.** Strahlteilungsprisma (30A - 30D) nach einem der vorhergehenden Ansprüche,
**dadurch gekennzeichnet,**
**dass** der transparente Körper (32) massiv ist und bevorzugt aus einem homogenen Material hergestellt ist.

**10.** Lichttaster (10) mit einem Lichtsender (12) zum Aussenden von Sendelicht (20) in eine Detektionszone (26), und mit zumindest einem ersten und einem zweiten Lichtempfänger (PD1, PD2), welche zum Empfangen von Empfangslicht (24) aus der Detektionszone (26), das von einem zu detektierenden Objekt (22) spiegelnd oder diffus reflektiert wird, und zum Erzeugen von Empfangssignalen aus dem Empfangslicht (24) eingerichtet sind, wobei im Strahlengang vor den Lichtempfängern (PD1, PD2) ein Strahlteilungsprisma (30A - 30D) nach einem der vorhergehenden Ansprüche angeordnet ist, wobei jedem Lichtempfänger (PD1, PD2) einer der Lichtaustrittspfade (38.1 - 38.3) des Strahlteilungsprismas (30A - 30D) zugeordnet ist, so dass in das Strahlteilungsprisma (30A - 30D) eintretendes Empfangslicht (24) zu einem Teil zu dem ersten Lichtempfänger (PD1) und einem anderen Teil zu dem zweiten Lichtempfänger (PD2) gelenkt wird, wobei jeder Lichtempfänger (PD1, PD2) eine wirksame Empfangsfläche aufweist, wobei die wirksame Empfangsfläche des zweiten Lichtempfängers (PD2) kleiner ist als die wirksame Empfangsfläche des ersten Lichtempfängers (PD1), so dass das Verhältnis zwischen dem von dem ersten Lichtempfänger (PD1) erzeugten Empfangssignal und dem von dem zweiten Lichtempfänger (PD2) erzeugten Empfangssignal von der Tastweite des detektierten Objekts (22) abhängt.
